# EUROPÄISCHE PATENTANMELDUNG

(11) **EP 1 331 413 A1**
(43) Veröffentlichungstag der Anmeldung: **30.07.2003**
(21) Anmeldenummer: 02001837.0
(22) Anmeldetag: 26.01.2002
(51) Int. Cl.: F16D 7/02, F16D 3/14

(54) **Schalt- und Sicherheitseinrichtung**

(71) Anmelder: Ford Global Technologies, Inc., A subsidiary of Ford Motor Company, Dearborn, Michigan 48126 (US)
(72) Erfinder: Premiski, Vladimir, 33950 Lege Cap Ferret (FR)
(74) Vertreter: Drömer, Hans-Carsten, Dipl.-Ing.

(57) **Zusammenfassung**

Die Erfindung bezieht sich auf eine Schalt- und Sicherheitseinrichtung, insb. Schalt- und Sicherheitskupplung 10 für eine Verwendung bei Maschinen, Kupplungseinheiten und/ oder Drehmomentenübertragungssystemen, mit einem treibenden Kupplungselement 11 und einem angetriebenen Kupplungselement 12, wobei diese insb. als Kupplungsgehäuse 13 und als damit in Wirkverbindung stehender Gegenträger 14 ausgebildet sind, und mit wenigstens einem mit dem treibenden Kupplungselement 11 und dem angetriebenen Kupplungselement 12 in Wirkverbindung stehenden Federelement 15 und mit einer Überlast-Schutzeinrichtung 16. Es ist dabei die Überlast- Schutzeinrichtung 16 als mit dem treibenden und dem angetriebenen Kupplungselement 11,12 in Wirkverbindung stehendes Mehrfach- Funktions- Federelement 17 ausgebildet.

## Beschreibung

Die Erfindung bezieht sich auf eine Schalt- und Sicherheitseinrichtung, insb. Schaltund Sicherheitskupplung für eine Verwendung bei Maschinen, Kupplungseinheiten und/ oder Drehmomentenübertragungssystemen, mit einem treibenden Kupplungselement und einem angetriebenen Kupplungselement, wobei diese insb. als Kupplungsgehäuse und als damit in Wirkverbindung stehender Gegenträger ausgebildet sind, und mit wenigstens einem mit dem treibenden Kupplungselement und dem angetriebenen Kupplungselement in Wirkverbindung stehenden Federelement und mit einer Überlast- Schutzeinrichtung.

Aus dem Stand der Technik sind verschiedene Schalt- und Sicherheitseinrichtungen, insb. Schalt- und Sicherheitskupplungen für eine Verwendung bei Maschinen, Kupplungseinheiten und/ oder Drehmomentenübertragungssystemen bekannt. So ist z.B. aus der DE 199 12 687 A1 eine form- und kraftschlüssige, drehmomenteinstellbare, drehrichtungsunabhängige Schalt- und Sicherheitskupplung bekannt, bei der jeweils zwischen einer radial genuteten Planflanke des treibenden und einer ebenso genuteten Planflanke des angetriebenen Bauteiles der Kupplung eine wellenförmige Ringfeder angeordnet ist, deren Wellen wechselseitig in die Nuten greifen und die bei Überlast, von der Drehkraft herausgedrückt, über die zwischen den Nuten verbliebenen Flächen des treibenden oder angetriebenen Kupplungsteils rutschen. Es soll mit dieser Anordnung eine robuste, drehmomenteinstellbare Schalt- und Sicherheitskupplung mit wenigen Bauteilen und geringem Montageaufwand herstellbar sein, die sich für einen großen Einsatzbereich eignet. Darüber hinaus soll sie sowohl trocken alsauch geschmiert oder in Umlauföl umlaufen können. Der Vorteil dieser Anordnung liegt also an sich in der Erzielung zufriedenstellender Funktionsergebnisse, nachteilig ist dabei allerdings, daß diese Anordnung zum einen konstruktiv recht aufwendig ist und zu anderen sehr präzise gefertigt werden muß. Es wird dadurch insgesamt die Fertigung dieser Anordnung erschwert und deutlich verteuert.

Aus der DE 199 03 863 A1 ist weiterhin eine Sicherheitskupplung zur Drehmomentbegrenzung, insbesondere für Bohrmaschinen oder Bohrhämmer bekannt, mit einem Käfig, in dem in Radialrichtung bewegliche Rastkörper aufgenommen sind, einem drehbaren Endstück, in dem Mulden zur Aufnahme von aus dem Käfig vorspringenden Bereichen der Rastkörper gebildet sind und mit einer Federeinrichtung zum Beaufschlagen der Rastkörper mit einer Kraft in Richtung der Mulden. Dabei ist vorgesehen, daß das Endstück den Käfig radial außen umgreift und daß die Kraft der Federeinrichtung radial nach außen gerichtet ist. Es soll diese Konstruktion den Einsatz bei hohen Drehzahlen erlauben und deshalb besonders zum Einsatz zwischen Motor und Untersetzungsgetriebe einer Bohrmaschine geeignet sein. Weiterhin soll die Anordnung durch ihren konstruktiven Aufbau besonders vorteilhaft hinsichtlich der auftretenden Alterungserscheinungen der Federeinrichtung sein. Auch diese Anordnung liefert an sich zufriedenstellende Funktionsergebnisse, aber auch hier ist wiederum nachteilig der konstruktiv aufwendige und eine hohe Präzision erfordernde Aufbau.

Aus der DE 43 24 203 A1 ist schließlich eine axiale Fixierung zwischen Reiblamelle und Kupplungsscheibe einer Reibungskupplung u.a. über Sprengringe bekannt. Die beschriebene Anordnung bezieht sich dabei auf eine Reibungskupplung mit einer Kupplungsscheibe, die über eine Verzahnung mit der entsprechenden Reiblamelle verbunden ist. Die axiale Fixierung zwischen Reiblamelle und Kupplungsscheibe erfolgt dabei auf der einen Seite durch einen Axialanschlag der Kupplungsscheibe und auf der anderen Seite durch einen eingesetzten Sprengring, der in einer nach radial innen offenen Nut mit nach radial außen wirkender Vorspannung eingesetzt ist. Es können dabei die Sprengringe unterschiedliche Ausbildungen aufweisen.

Ausgehend von diesen bekannten Schalt- und Sicherheitseinrichtungen, insb. Schalt- und Sicherheitskupplungen liegt der Erfindung die Aufgabe zugrunde, die bekannten Anordnungen unter Beibehaltung der bisherigen Vorteile in der Weise zu verbessern bzw. weiterzuentwickeln, daß eine einfachere und preisgünstigere Herstellung als bisher ermöglicht wird, wobei die gewünschte Anordnung trotzdem hinsichtlich ihrer Funktionseigenschaften den bestehenden Anforderungen vollkommen genügen soll. Die gewünschte Anordnung soll insb. auch robust sein und die z.B. durch dynamische Effekte wie Beschleunigungen oder Verzögerungen in sehr kurzen Zeitabständen entstehenden Überlast- Beanspruchungen reduzieren bzw. vermeiden, um die oftmals empfindlichen Umgebungs- Komponenten oder Systeme zu schützen.

Die Aufgabe wird erfindungsgemäß dadurch gelöst, daß die Überlast-Schutzeinrichtung als mit dem treibenden und dem angetriebenen Kupplungselement in Wirkverbindung stehendes Mehrfach- Funktions-Federelement ausgebildet ist. Auf diese Weise wird erstmalig mit einfachen Mitteln die Möglichkeit geschaffen, eine einfachere und preisgünstigere Herstellung als bisher zu ermöglichen und trotzdem die entstehenden Überlast- Beanspruchungen zu reduzieren bzw. zu vermeiden, um so die erwähnten, empfindlichen Umgebungs-Komponenten oder Systeme zu schützen. Die erfindungsgemäße Anordnung zeichnet sich dabei insb. durch die Verwirklichung des einfach aufgebauten Mehrfach- Funktions- Federelementes aus, das zum einen die Funktionen der Bereitstellung axialer und radialer Federkräfte übernimmt, eine Reibung zwischen den einander berührenden Oberflächen erzielt und außerdem gleichzeitig die Funktion einer Überlast- Schutzeinrichtung übernimmt.

Bei der bevorzugten Ausführungsform der vorliegenden Erfindung ist das Mehrfach-Funktions- Federelement mit Mitteln zur Reduzierung der Beanspruchung bei Überlast ausgebildet. Alternativ oder ergänzend kann nach einem weiteren Merkmal der vorliegenden Erfindung das Mehrfach- Funktions- Federelement mit Mitteln zum Auseinanderdrücken der beiden Kupplungselemente bei Überlast ausgebildet sein. Dadurch können die entstehenden Überlast- Beanspruchungen reduziert bzw. vermieden werden, wodurch die erwähnten, empfindlichen Umgebungs-Komponenten oder Systeme geschützt werden.

Nach einem weiteren Ausgestaltungsmerkmal der vorliegenden Erfindung sind dabei die Mittel zur Reduzierung der Beanspruchung bei Überlast und/ oder zum Auseinanderdrücken der beiden Kupplungselemente als an dem Mehrfach-Funktions- Federelement ausgebildeter Federbügel- Absorptionsbereich ausgebildet. Dieser an dem Mehrfach- Funktions- Federelement ausgebildete Federbügel- Absorptionsbereich ist dabei bevorzugt im wesentlichen U- förmig ausgebildet. Dies ist eine in konstruktiver Hinsicht besonders einfache Ausgestaltung des Mehrfach- Funktions- Federelementes bzw. des Federbügel-Absorptionsbereiches.

Nach einem weiteren Merkmal der vorliegenden Erfindung wirkt das als Gegenträger ausgebildete eine Kupplungselement über Gegenträger- Lappen mit entsprechend in dem als Kupplungsgehäuse ausgebildeten zweiten Kupplungselement ausgebildeten Ausnehmungen zusammen. Es ist eine solche Ausführung einfach und preisgünstig herstellbar.

Zur Erhöhung der Lebensdauer der Anordnung empfiehlt es sich nach einem weiteren Merkmal der vorliegenden Erfindung, daß die Gegenträger- Lappen des als Gegenträger ausgebildeten einen Kupplungselementes mit zusätzlichen Anschlägen versehen sind.

Nach einem weiteren Vorschlag der vorliegenden Erfindung ist der an dem Mehrfach- Funktions- Federelement ausgebildete Federbügel- Absorptionsbereich im wesentlichen winkelförmig ausgebildet. Diese Ausführung ist ebenfalls einfach und kostengünstig herstellbar. Dabei empfiehlt es sich, daß der winkelförmig ausgebildete Federbügel- Absorptionsbereich in Bezug auf die Horizontale jeweils in einem Winkel von 30° geneigt ausgebildet ist. Bei einer anderen Ausführungsform ist der winkelförmig ausgebildete Federbügel- Absorptionsbereich in Bezug auf die Horizontale jeweils in einem Winkel von 45° geneigt ausgebildet. Zweckmäßig kann dabei der winkelförmig ausgebildete Federbügel-Absorptionsbereich in Bezug auf die Drehachse mittig liegend ausgebildet sein, bei einer anderen Ausführungform kann der winkelförmig ausgebildete Federbügel-Absorptionsbereich in Bezug auf die Drehachse seitlich versetzt liegend ausgebildet sein.

Nach einem letzten Merkmal der vorliegenden Erfindung ist zur Verbesserung der Kupplungseigenschaften zwischen dem als Gegenträger ausgebildeten einen Kupplungselement und dem als Kupplungsgehäuse ausgebildeten zweiten Kupplungselement zusätzliches Reibungsmaterial vorgesehen. Dieses zusätzliche Reibungsmaterial kann dabei insb. zwischen den Gegenträger- Lappen des Gegenträgers und den Ausnehmungen des Kupplungsgehäuses vorgesehen sein.

Die Erfindung ist in den Figuren der Zeichnung in mehreren Ausführungsbeispielen dargestellt. Es zeigen:
- Fig. 1: eine weggebrochene Schnittansicht einer Freilaufkupplung mit einer erfindungsgemäßen Schalt- und Sicherheitskupplung,
- Fig. 2: eine weggebrochene Schnittansicht durch die erfindungsgemäße Schalt- und Sicherheitskupplung,
- Fig. 3: eine weggebrochene Seitenansicht des Federelementes einer ersten Ausführungsform der erfindungsgemäßen Schalt- und Sicherheitskupplung,
- Fig. 4: eine weggebrochene Schnittansicht durch die erste Ausführungsform der erfindungsgemäßen Schalt- und Sicherheitskupplung,
- Fig. 5: eine weggebrochene Schnittansicht einer zweiten Ausführungsform der erfindungsgemäßen Schalt- und Sicherheitskupplung,
- Fig. 6: eine weggebrochene Schnittansicht einer dritten Ausführungsform der erfindungsgemäßen Schalt- und Sicherheitskupplung,
- Fig. 7: eine weggebrochene Schnittansicht einer vierten Ausführungsform der erfindungsgemäßen Schalt- und Sicherheitskupplung.

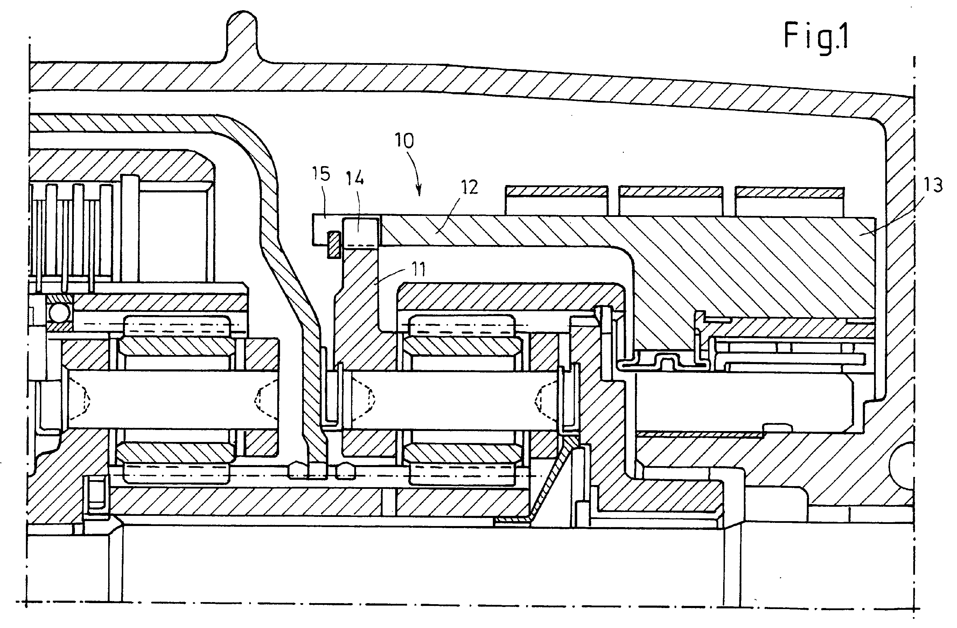

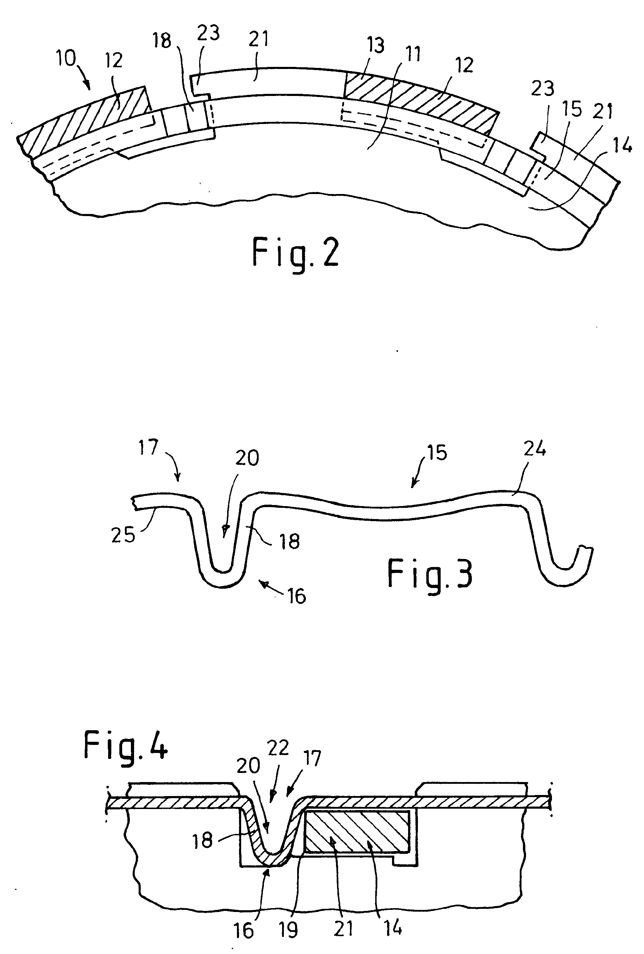

Die erfindungsgemäße Schalt- und Sicherheitseinrichtung, insb. Schalt- und Sicherheitskupplung ist generell mit 10 bezeichnet. Sie dient insb. für eine Verwendung bei Maschinen, Kupplungseinheiten und/ oder Drehmomentenübertragungssystemen. Die erfindungsgemäße Schalt- und Sicherheitseinrichtung 10 umfaßt, siehe z.B. die Fig. 2 der Zeichnung, ein treibendes Kupplungselement 11 und ein angetriebenes Kupplungselement 12, wobei diese im vorliegenden Falle als Kupplungsgehäuse 13 und als damit in Wirkverbindung stehender Gegenträger 14 ausgebildet sind. Die erfindungsgemäße Schalt- und Sicherheitseinrichtung 10 ist z.B. für eine Anwendung in einer Freilaufkupplung in einem Automatikgetriebe vorgesehen, es ist dazu in der Fig. 1 der Zeichnung ein Ausschnitt einer mit einer erfindungsgemäßen Schalt- und Sicherheitseinrichtung 10 ausgestatteten Freilaufkupplung eines Automatikgetriebes dargestellt. Es werden bzgl. dieser Fig. 1 dazu noch weiter unten einige Erläuterungen bzgl. der Wirkungsweise der erfindungsgemäßen Schalt- und Sicherheitseinrichtung 10 in dieser Anordnung gegeben, die Anordnung selbst wird in diesem Zusammenhang nicht weiter erläutert.

Die erfindungsgemäße Schalt- und Sicherheitseinrichtung 10 ist im weiteren mit wenigstens einem, im vorliegenden Falle genau einem, mit dem treibenden Kupplungselement 11 und dem angetriebenen Kupplungselement 12 in Wirkverbindung stehenden Federelement 15 ausgestattet, sowie mit einer Überlast-Schutzeinrichtung 16. Es ist dabei erfindungsgemäß die Überlast-Schutzeinrichtung 16 als mit dem treibenden und dem angetriebenen Kupplungselement 11,12 in Wirkverbindung stehendes Mehrfach- Funktions-Federelement 17 ausgebildet. Es wird dadurch eine einfachere und preisgünstigere Herstellung als bisher ermöglicht und trotzdem werden die entstehenden Überlast-Beanspruchungen reduziert bzw. vermieden, um so empfindliche Umgebungs-Komponenten oder Systeme zu schützen. Die Anordnung zeichnet sich dabei insb. durch die Verwendung eines einfach aufgebauten Mehrfach- Funktions-Federelementes 17 aus, das zum einen die Funktionen der Bereitstellung axialer und radialer Federkräfte übernimmt, eine Reibung zwischen den einander berührenden Oberflächen erzielt und außerdem gleichzeitig die Funktion der Überlast- Schutzeinrichtung 16 übernimmt.

Das Mehrfach- Funktions- Federelement 17 ist bevorzugt mit Mitteln 18 zur Reduzierung der Beanspruchung bei Überlast ausgebildet, alternativ oder ergänzend kann dieses Mehrfach- Funktions- Federelement 17 mit Mitteln 19 zum Auseinanderdrücken der beiden Kupplungselemente 11,12 bei Überlast ausgebildet sein. Dadurch werden die entstehenden Überlast- Beanspruchungen reduziert bzw. vermieden, wodurch die erwähnten, empfindlichen Umgebungs- Komponenten oder Systeme geschützt werden.

Die Mittel 18,19 zur Reduzierung der Beanspruchung bei Überlast und/ oder zum Auseinanderdrücken der beiden Kupplungselemente 11,12 sind, siehe insb. die Fig. 3 und 4 der Zeichnung, als an dem Mehrfach- Funktions- Federelement 17 ausgebildeter Federbügel- Absorptionsbereich 20 ausgebildet, wobei dieser bevorzugt im wesentlichen U-förmig ausgebildet sein kann, siehe Fig. 3 und 4.

Das als Gegenträger 14 ausgebildete eine Kupplungselement 12 wirkt, siehe wieder z.B. die Fig. 4, über Gegenträger- Lappen 21 mit entsprechend in dem als Kupplungsgehäuse 23 ausgebildeten zweiten Kupplungselement 11 ausgebildeten Ausnehmungen 22 zusammen.

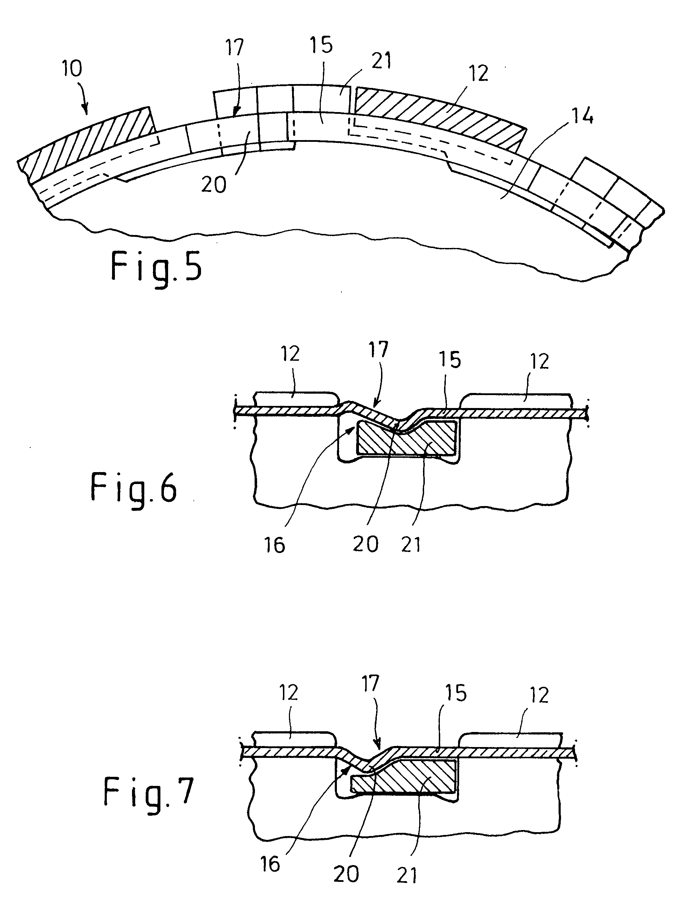

Bei der in der Fig.5 dargestellten Ausführungsform sind zur Erhöhung der Lebensdauer der Anordnung die Gegenträger- Lappen 21 des als Gegenträger 14 ausgebildeten einen Kupplungselementes 12 mit zusätzlichen Anschlägen 23 versehen.

Bei den in den Fig. 6 und 7 dargestellten Ausführungsformen ist der an dem Mehrfach- Funktions- Federelement 17 ausgebildete Federbügel-Absorptionsbereich 20 im wesentlichen winkelförmig ausgebildet. Dabei kann der winkelförmig ausgebildete Federbügel- Absorptionsbereich 20 in Bezug auf die Horizontale jeweils in einem Winkel von 30° geneigt ausgebildet sein, siehe Fig. 6, bei einer anderen Ausführungsform kann der winkelförmig ausgebildete Federbügel- Absorptionsbereich 20 in Bezug auf die Horizontale jeweils in einem Winkel von 45° geneigt ausgebildet sein, siehe Fig. 7. Dabei kann der winkelförmig ausgebildete Federbügel- Absorptionsbereich 20 in Bezug auf die Drehachse mittig liegend ausgebildet sein, siehe Fig. 6, bei einer anderen Ausführungsform kann der winkelförmig ausgebildete Federbügel- Absorptionsbereich 20 in Bezug auf die Drehachse seitlich versetzt liegend ausgebildet sein, siehe Fig. 7.

Nach der erfindungsgemäßen Anordnung ist außerdem vorgesehen, daß zwischen dem als Gegenträger 14 ausgebildeten einen Kupplungselement 12 und dem als Kupplungsgehäuse 13 ausgebildeten zweiten Kupplungselement 11 zusätzliches Reibungsmaterial vorgesehen ist. Dieses zusätzliche Reibungsmaterial kann dabei insb. zwischen den Gegenträger- Lappen 21 des Gegenträgers 14 und den Ausnehmungen 22 des Kupplungsgehäuses 13 vorgesehen sein. Durch diese Ausbildung ergibt sich durch die Reduzierung bzw. Vermeidung eines direkten gegenseitigen Metallkontaktes ein positiver Einfluß auf das Schaltverhalten bzw. den Schalt- Komfort.

Mit der erfindungsgemäßen Anordnung wird eine einfachere und preisgünstigere Herstellung als bisher ermöglicht und trotzdem werden die entstehenden Überlast-Beanspruchungen reduziert bzw. vermieden, um so empfindliche Umgebungs-Komponenten oder Systeme zu schützen. Die erfindungsgemäße Anordnung zeichnet sich dabei insb. durch die Verwirklichung des einfach aufgebauten Mehrfäch- Funktions- Federelementes 17 aus, das zum einen die Funktionen der Bereitstellung axialer und radialer Federkräfte übernimmt, eine Reibung zwischen den einander berührenden Oberflächen erzielt und außerdem gleichzeitig die Funktion einer Überlast- Schutzeinrichtung 16 übernimmt.

Die erfindungsgemäße Anordnung dient insb. dazu, sich durch dynamische Effekte wie Beschleunigungen oder Verzögerungen in sehr kurzen Zeitabständen ergebende Überlast- Beanspruchungen zu reduzieren bzw. zu vermeiden. Denn durch diese Überlast- Beanspruchungen kann es, abhängig von der Zeit und dazwischenliegenden Teilen, dazu kommen, daß z.B. das resultierende Moment das Grenzmoment der beanspruchten Teile überschreitet, und es so zu deren Zerstörung oder Beschädigungen kommen kann. Ein Beispiel dafür ist das plötzliche Entlasten der Park- Einstellung an einem Berg. Es ergab sich dadurch für die bisher bekannten Anordnungen ein erhöhtes Sicherheitserfordernis, was die Herstellungskosten deutlich erhöhte.

Dies wird durch die erfindungsgemäße Anordnung vermieden. Um die entstehenden Überlast- Beanspruchungen zu reduzieren bzw. zu vermeiden, wird erfindungsgemäß ein einfaches Feder- bzw. Dämpfungssystem verwendet, daß an verschiedenen Positionen anstelle von herkömmlichen Federelementen verwendet werden kann, die bisher im wesentlichen nur dazu dienten, Teile miteinander zu verbinden. Durch die erfindungsgemäße Anordnung, d.h. insb. durch die Verwirklichung des einfach aufgebauten Mehrfach- Funktions- Federelementes 17 werden dagegen zum einen die Funktionen der Bereitstellung axialer und radialer Federkräfte übernommen, es wird zum anderen eine Reibung zwischen den einander berührenden Oberflächen erzielt und außerdem wird gleichzeitig die Funktion einer Überlast- Schutzeinrichtung 16 übernommen. Dies ergibt sich im einzelnen wie folgt:

Der Bereich 24 des Federelementes 15 beaufschlagt axial den Gegenträger 14 gegen das Kupplungsgehäuse 13, siehe auch die Fig. 1, wodurch auch eine Reibungskraft und eine Dämpfungsfunktion erzielt wird. Der Federbügel-Absorptionsbereich 20 ist zwischen den Gegenträger- Lappen 21 und den Ausnehmungen 22 des Kupplungsgehäuses 13 angeordnet, wodurch ein Teil der radialen Beanspruchung aufgenommen und die Dauer der Beanspruchung erhöht wird, wodurch sich auch insg. eine Reduzierung der Belastung ergibt. Die in der Fig. 5 gezeigten zusätzlichen Anschläge 23 an den Gegenträger- Lappen 21 vermeiden außerdem ein Blockieren der Federanordnung, was zu einer Erhöhung der Lebensdauer führt. Weiterhin werden durch den Bereich 25 des Federelementes 15 in bekannter Weise die zusammenwirkenden Teile miteinander verbunden.

Durch die Ausführungsformen nach den Fig. 6 und 7 wird eine progressive Dämpfungsfunktion erreicht, die variiert werden kann, in Abhängigkeit des Winkels und der Materialstärke des Federelementes 15. Je höher die Belastung ist, um so länger ist die radiale Bewegung des Gegenträgers 14, und um so höher ist die axiale Belastung und die Reibung zwischen den Gegenträger- Lappen 21 und den Ausnehmungen 22 des Kupplungsgehäuses 13. Das Ergebnis ist eine Energie-Aussetzung oder eine bessere Umsetzung in Wärmeabstrahlung.

Wie bereits erwähnt, sind die dargestellten Ausführungsformen nur beispielsweise Verwirklichungen der Erfindung, diese ist nicht darauf beschränkt, es sind vielmehr noch mancherlei Abänderungen und Ausbildungen möglich. So sind insb. Abwandlungen bzgl. des Mehrfach- Funktions- Federelementes 17 denkbar, weiterhin denkbar sind Variationen bzgl. der Ausbildung der Kupplungselemente 11,12 und zwar insbesondere hinsichtlich der Ausgestaltung der Reibflächen.

## Patentansprüche

1. Schalt- und Sicherheitseinrichtung, insb. Schalt- und Sicherheitskupplung (10) für eine Verwendung bei Maschinen, Kupplungseinheiten und/ oder Drehmomentenübertragungssystemen, mit einem treibenden Kupplungselement (11) und einem angetriebenen Kupplungselement (12), wobei diese insbesondere als Kupplungsgehäuse (13) und als damit in Wirkverbindung stehender Gegenträger (14) ausgebildet sind, und mit wenigstens einem mit dem treibenden Kupplungselement (11) und dem angetriebenen Kupplungselement (12) in Wirkverbindung stehenden Federelement (15) und mit einer Überlast- Schutzeinrichtung (16),
**dadurch gekennzeichnet, daß**
die Überlast- Schutzeinrichtung (16) als mit dem treibenden und dem angetriebenen Kupplungselement (11,12) in Wirkverbindung stehendes Mehrfach- Funktions- Federelement (17) ausgebildet ist.

2. Schalt- und Sicherheitseinrichtung nach Anspruch 1,
**dadurch gekennzeichnet, daß**
das Mehrfach- Funktions- Federelement (17) mit Mitteln (18) zur Reduzierung der Beanspruchung bei Überlast ausgebildet ist.

3. Schalt- und Sicherheitseinrichtung nach Anspruch 1 oder 2,
**dadurch gekennzeichnet, daß**
das Mehrfach- Funktions- Federelement (17) mit Mitteln (18) zum Auseinanderdrücken der beiden Kupplungselemente (11,12) bei Überlast ausgebildet ist.

4. Schalt- und Sicherheitseinrichtung nach Anspruch 2 oder 3,
**dadurch gekennzeichnet, daß**
die Mittel (18,19) zur Reduzierung der Beanspruchung bei Überlast und/ oder zum Auseinanderdrücken der beiden Kupplungselemente (11,12) als an dem Mehrfach- Funktions- Federelement (17) ausgebildeter Federbügel-Absorptionsbereich (20) ausgebildet sind.

5. Schalt- und Sicherheitseinrichtung nach Anspruch 4,
**dadurch gekennzeichnet, daß**
der an dem Mehrfach- Funktions- Federelement (17) ausgebildete Federbügel- Absorptionsbereich (20) im wesentlichen U- förmig ausgebildet ist.

6. Schalt- und Sicherheitseinrichtung nach einem der Ansprüche 1 bis 5,
**dadurch gekennzeichnet, daß**
das als Gegenträger (14) ausgebildete eine Kupplungselement (12) über Gegenträger- Lappen (21) mit entsprechend in dem als Kupplungsgehäuse (13) ausgebildeten zweiten Kupplungselement (11) ausgebildeten Ausnehmungen (22) zusammenwirkt.

7. Schalt- und Sicherheitseinrichtung nach Anspruch 6,
**dadurch gekennzeichnet, daß**
die Gegenträger- Lappen (21) des als Gegenträger (14) ausgebildeten einen Kupplungselementes (12) mit zusätzlichen Anschlägen (23) versehen sind.

8. Schalt- und Sicherheitseinrichtung nach einem der Ansprüche 1 bis 7,
**dadurch gekennzeichnet, daß**
der an dem Mehrfach- Funktions- Federelement (17) ausgebildete Federbügel- Absorptionsbereich (20) im wesentlichen winkelförmig ausgebildet ist.

9. Schalt- und Sicherheitseinrichtung nach Anspruch 8,
**dadurch gekennzeichnet, daß**
der winkelförmig ausgebildete Federbügel- Absorptionsbereich (20) in Bezug auf die Horizontale jeweils in einem Winkel von 30° geneigt ausgebildet ist.

10. Schalt- und Sicherheitseinrichtung nach Anspruch 8,
**dadurch gekennzeichnet, daß**
der winkelförmig ausgebildete Federbügel- Absorptionsbereich (20) in Bezug auf die Horizontale jeweils in einem Winkel von 45° geneigt ausgebildet ist.

11. Schalt- und Sicherheitseinrichtung nach einem der Ansprüche 8 bis 10,
**dadurch gekennzeichnet, daß**
der winkelförmig ausgebildete Federbügel- Absorptionsbereich (20) in Bezug auf die Drehachse mittig liegend ausgebildet ist.

12. Schalt- und Sicherheitseinrichtung nach einem der Ansprüche 8 bis 10,
**dadurch gekennzeichnet, daß**
der winkelförmig ausgebildete Federbügel- Absorptionsbereich (20) in Bezug auf die Drehachse seitlich versetzt liegend ausgebildet ist.

13. Schalt- und Sicherheitseinrichtung nach einem der Ansprüche 6 bis 12,
**dadurch gekennzeichnet, daß**
zwischen dem als Gegenträger (14) ausgebildeten einen Kupplungselement (12) und dem als Kupplungsgehäuse (13) ausgebildeten zweiten Kupplungselement (11) zusätzliches Reibungsmaterial vorgesehen ist.
